# EUROPEAN PATENT SPECIFICATION

(11) **EP 1 153 901 B1**
(45) Date of publication and mention of the grant of the patent: **08.07.2015**
(21) Application number: 01111424.6
(22) Date of filing: 10.05.2001
(51) Int. Cl.: C05D 9/02, C05G 3/00

(54) **Composition for increasing the vegetable nutritional quality and the use thereof**
Zusammensetzung zur Erhöhung der Nahrungsqualität von Gemüse und deren Verwendung
Composition pour augmenter la qualité nutritionnelle des légumes et son utilisation

(30) Priority: 11.05.2000 IT BO000277
(43) Date of publication of application: 14.11.2001
(73) Proprietor: Consorzio Patata Italiana di Qualità Società Consortile a Responsabilità Limitata, 40055 Castenaso (BO) (IT)
(72) Inventor: Pifferi, Piergiorgio, 40139 Bologna (IT); Poggi, Valeria, 40022 Castel del Rio (Bologna) (IT); Quagliano, Roberto, San Severo (Foggia) (IT)
(74) Representative: Negrini, Elena

(56) References cited:
- EP-A- 0 864 257
- WO-A-00/18703
- WO-A-99/29638
- US-A- 5 186 738
- DATABASE WPI Section Ch, Week 199629 Derwent Publications Ltd., London, GB; Class C04, AN 1996-285449 XP002256068 & RU 2 048 461 C (GOLENETSKII S P), 20 November 1995 (1995-11-20)
- DATABASE WPI Section Ch, Week 200025 Derwent Publications Ltd., London, GB; Class C04, AN 2000-285450 XP002256069 & HU 9 800 862 A (VARGA A), 28 February 2000 (2000-02-28)
- DATABASE CA [Online] CHEMICAL ABSTRACTS SERVICE, COLUMBUS, OHIO, US; COIC, Y. ET AL: "Microelement contents of tomatoes and cucumbers grown in "no soil" cultures supplemented with solutions of microelements specifically indispensible to humans" retrieved from STN Database accession no. 90:85828 CA XP002256067 & COMPTES RENDUS DES SEANCES DE L'ACADEMIE D'AGRICULTURE DE FRANCE (1978), 64(10), 787-92 ,

## Description

The present invention refers to the vegetable treatment suitable to increase the nutritional value for better preserving human or animal health, and/or for reducing the anti-nutritional factors for human being and/or for animals.

Particularly it is object of the present invention a composition for increasing vegetable nutritional quality by increasing the selenium and vanadium content mainly, and/or iodine, and/or zinc, and/or C vitamin, and/or for decreasing the nitrates and glyco alkaloids content in vegetables, particularly horticultural crops, also from full field, such as potato, tomato, carrot, broccolis, fennel, cauliflower, artichoke, radish, eggplant, pepper, onion, garlic, beet, lettuce, succory, chicory, of fruit crops such as apple tree, pear tree, apricot tree, cherry, nectarine, peach tree, actinide, plum tree, vine, oil industrial crops such as soy, colza, sunflower, or sugar crops such as sugar beet or sugar cane, cereal crops such as wheat, barley, corn, sorghum, oat, rice, officinal plants and spice such as red pepper, pepper, rosemary and fodder plant both rotated and permanent.

It is known, in fact, that the foods, mostly the vegetables, have nutrients having energetic and constitutional functions, and further functional properties to the regulation of the biochemical processes and such that the corrected addition in the diet of these latter is recommended for the promotion of good health.

Derwent Publications, Database WPI, Abstract U. AN=1996-2854491 RV-A-2048461 (Golenetskii) discloses a fertilizer comprising selenate, vanadate and water.

The LARN publications (Levels of Assumption Recommended of energy and Nourishing for the Italian population, edition 1996) suggest a daily assumption of selenium equal to 50 micrograms.

It is known, in fact, that the selenium is necessary to promote the good health and particularly to reduce the risk of degenerative diseases such as some tumoral forms or cardio-circulatory apparatus diseases. The selenium, in association with other chemical species such as especially the vitamin E, seems to reduce the concentration of free radicals, in vitro and in vivo, being the free radicals, especially the hydroxide and superoxide radicals, the cause, according to the most accredited biochemical hypotheses, of the tumor arise and the cellular membrane degeneration, with consequent cell aging phenomenon of the cells and coronary disease arising.

On the other hand the selenium is distributed in very different manner in the foods, since it is present, in fact, in high concentration in the fishes and in the shellfishes (0,15-1,4 µg/g), medium in the cereals (0,10-0,35 µg/g), lower in the cheeses and in the meats (0,05-0,13 g/g), very low in the vegetables (0,001-0,020 µg/g), in fruit (0,002-0,018 µg/g) and in the fats (0,002-0,010 µg/g). The greater bio-assimilability of the selenium forms in the vegetables makes desirable an increase of said element in the vegetables, particularly it is very interesting a small amount increase in foods consumed diffusely and in high quantity.

For the VANADIUM it is documented the need of its addition into the food with inaccurate measure (LARN-SINU, edition 1996: undefined). The element operates in the bone and teeth mineralizzation and in the catecholamines and lipids metabolism for the feedback control of the biosynthesis of the cholesterol at the HMGCoA reductase level. For a possible interaction with the cholesterol metabolism, the nutritionist's interest for the element is in strong growth. Information about the main sources of vanadium for the diet is limited and the integrating alimentary products including this element are totally absent.

The IODINE is essential for the man as constituent of the hormonal complex of the thyroid, which almost totally subtracts the element from blood and elaborates it toward intermediary stages up to the tyroxine formation: the lack of iodine conditions the tyroxine biosynthesis. The ingested iodine is completely absorbed, while the iodine in organically bond form is absorbed more slowly. The human requirement is 150 micrograms per day (LARN-SINU, edition 1996) for both sexes with an increase of 25 micrograms per day for the pregnant women and of 50 micrograms per day for the nursing women. The iodine lack is very diffused in the world and particularly in Italy, especially in the distant zones from the sea (Alto Adige, Piemonte, Valle d'Aosta, some areas of the Campania): in the whole national territory there is however a mean daily addition lower than the suggested levels. The simplest method to face such lacks is the use of salt, but the use of enriched salt does not reach the value of 3%, while for an effectiveness preventive treatment the use should reach at least the 2/3 of the global kitchen-salt use.

The richest food of iodine is the fish, while in the other foods the iodine content varies according to the ground types and the interventions for agriculture and for industry. By way of example (LARN-SINU, edition 1996) the iodine content (stated in 100 grams) is 2-5 micrograms in fruit, vegetable, cereals, milk and meat, and 50-100 micrograms in fish. Globally, the iodine amount introduced with milk, meat, cereals and vegetables is higher than the iodine amount introduced with fish, which is consumed with small frequency. For this reason, even a small element increase, but in foods consumed diffusedly and in high amount, would be very interesting.

The ZINC is a structural and functional component. The element is essential for the bone and the muscle formation and, when lacking, can become a nourishing limiting such synthesis. The zinc participates in the catalytic action of the carboxypeptidase and the carbonic anhydrase, it is constituent of the alcoholic dehydrogenase, the DNA and RNA polymerase, the alkaline phosphatase, the lactic dehydrogenase and the superoxide dismutase. It plays, together with iodine and selenium, an important function in the metabolism of the thyroid hormones. Maintaining the configuration of some non enzymatic proteins such as the DNA transcription factors, the tymulin and the insuline (the diabetic's pancreas contains an amount of this element lower than the standard), the zinc is important for the maturation of the immune system cells deriving from the thyme. The zinc plays an antioxidant activity, preventing the lipidic peroxidation and reducing the formation of free radicals. The zinc administration causes temporary improvements in some leukemia forms, increases the gustative-organoleptic perception which is reduced in the elderly peoples. Recent studies shown that zinc, together with selenium, is important to prevent the flu disorders strengthening the immune system. A regular zinc addition with the feeding is necessary since there are not any specific zinc reserves. States of zinc lack are reported in some geographical areas characterized by malnutrition or following some illnesses (enteropathic acrodermatitis, Crohn' disease, sickle cell anemia). The main alimentary sources are the meat, the eggs, the fish, the milk, the dairy products and the cereals. The average absorption is 10-40% and the bioavailability is higher in the foods of animal origin, since the foods of vegetable origin contain component, such as the fitatis and the fiber, that make more difficult the intestinal absorption of the element. The average zinc requirement is calculated in 10 mg in the males and 7 mg in the females per day, with an increase of 5 mg per day during the nursing (LARN-SINU, 1996). The zinc concentration increase, by means of special enrichments, in some vegetable species, especially in those having a low content of phytic acid and fiber, could be a good system to maintain a good level of assumption of the element especially in population portions at risk, such as the vegetarian and the vegans (integral vegetarians). Furthermore, the use of zinc sulfate seems to increase, according to what observed on the potato, the vitamin C content of some vegetable species.

The MOLYBDENUM belongs to the enzyme flavoproteic liver xantine oxidase and others, such as the aldehyde oxidase and the nitrate reductase, and is therefore essential for the human organisms (LARN-SINU, 1996: undefined; RDA - Recommended Daily Allowance: 0,15-0,50 mg per day). The molybdenum administration to the plants is interesting since different studies show that in the potato the concentration of the glycoalkaloids and nitrates, known anti-nutritional factors, is reduced and the vitamin C content is increased.

Methods have been already proposed for the increase of the selenium in some vegetable, by means of the ground manuring, but not by means of leaf manuring to parts of plant, fruits, tubers, roots and bulbs of several fruit and vegetable species or industrial crops and never in association with the vanadium, for which there are not, on the other hand, examples of enrichment for vegetables food use. The molybdenum administration via leaf to the potato for reducing the nitrates and glycoalkaloids content has already been observed, but there are not other known cases of molybdenum administration to other vegetable species in order to get an equivalent result. The iodine administration to the plants for increasing in these latter the element content has not been proposed for several vegetable species. The zinc administration is instead known in agriculture, being the zinc an element of the vegetable nutrition, but its administration in a balanced way, carried out for obtaining edible products with a zinc dietary content, is not known. It is not known the joined administration via leaf to vegetables of selenium and vanadium with iodine, molybdenum and zinc for improving the overall nutritional quality of the products, for the man or for the animals. Particularly the administration to a vegetable has not been ever proposed, so that the vegetable assimilates them and transfers them to the edible parts, of mineral or however microelements in varying and combined proportions, defined according to the particular food and according to the subject which will consume the food, in such a way to answer to particular and defined nutritional requirements or even to have specific functionalities in promoting the good health. The application is considered extended also to the forages for breeding animals: it is in fact opportune to provide a secondary enrichment of the meats, the milk and the dairy product, the eggs etcetera.

To fully achieve said finality it is opportune to use liquid solutions of the aforesaid element salts with which to sprinkle the leaves, the roots or plant portions.

Said procedure, in fact, allows to use reduced quantity of the minerals and microelements above mentioned, being this administration method to vegetables much more efficient than the ground administration method, for instance by means of solid or liquid fertilizers. Consequently it is a cheaper method to achieve the purpose above described. At the same time it is a method less dangerous for the environment, since it is associated, in fact, with an high vegetable absorption, a low dispersion in the environment, in the stratum and superficial waters and in the grounds.

Furthermore, it is a method that allows an efficient result control of the enrichment of the vegetable, or of its edible part, and the possibility to plan said enrichment in such a way to answer specific nutritional requirements of specific population parts or particular breeding animals.

The main object of the present invention is to propose a chemical composition as defined in claim 1 suitable to increase the content of selenium, vanadium and iodine, and/or zinc, and/or vitamin C and/or to decrease the glycoalkaloids and nitrates content in vegetable, particularly in horticultural crops also of full field, in fruit crops, in industrial crops, in cereals, in officinal and spice plants and fodder plant both rotated and permanent.

Further purpose is to propose a chemical composition having a simple and economic realization, an easy use and a low environmental impact.

The composition object of the present invention is in the form of an aqueous solution of selenium salts, with a selenium content per liter ranging from 0,005 milligrams to 20 grams, and of vanadium salts, with a vanadium content per liter of solution included between 0,0005 milligrams and 3 grams, and iodine salts, with a iodine content per liter of solution ranging from 0,005 milligrams to 20 grams, and/or of molybdenum salts having a molybdenum content per liter of solution ranging from 0,005 milligrams to 20 grams, and/or zinc salts with a content of zinc per liter of solution ranging from 0,005 milligrams to 20 grams.

The selenium salts are essentially selenite and selenate salts of: sodium, potassium, calcium, magnesium, barium, copper and ammonium and zinc.

The vanadium salts are essentially constituted by metavanadates and vanadates of sodium, potassium, and ammonium.

The iodine salts are essentially constituted by iodides and iodates of sodium, potassium, calcium, magnesium, barium, copper and ammonium.

The molybdenum salts are essentially constituted by molybdates of sodium, potassium and ammonium.

The zinc salts are essentially constituted by zinc sulfate, acetate, chloride, perchlorate, nitrate, stearate, sulfur and oxide.

The aqueous solution can contain liquid components acting on the cellular membrane of the plants, such as essentially organic solvents in ratio from 0,005% to 25 % of the liquid phase, for making easier the adsorption of the selenium by the leaf apparatus or the roots in hydroponic solution or the fruits or the tubers or the bulbs or other parts of plants. Said solvents singularly include or in their mixtures: the dimethylsulfoxide, the glycols of the type ethylenic, polyethylenic, hexilenic, butyl, 1-2 propylenglycoles, the ethers of glycols and polyglycols with methyl alcohol, ethylic, propylic, butyl and the other glycols up to a molecular weight of 20.000, the polyglycols and the polyoxyethylenglycols 20.000 ppm each.

The aqueous solution can further contain components suitable for the ionic bond of the aforesaid elements since they have functional groups that can interact with weak bonds with anions such as selenites and selenates, vanadate and metavanadate, iodides and iodates, molybdates or cations such as the zinc. The functional groups are in particular hydroxyl, carboxyl, carbonyl, amines, sulphidryls, phenols and are often fit to form a bond between the aforesaid ions and the vegetable tissue to which they are equally similar. Said components constitute a quite wide class but that can be essentially reported as following:
- surface-active agents, which consequently support the wettability with the composition of the aerial part or the other vegetable parts and they reduce the interface tension of the composition and the vegetable tissue;
- and/or biopolymers, which consequently regulate or delay the aforesaid elements transfer to the vegetable and modify the solution viscosity;
- and/or chelating agents, which consequently make available for a longer time the aforesaid elements for the plants;
- and/or amino acids, polyamino acids and polyamines, which bond the contained element in the composition and help the transport of said element inside the vegetable tissue;
- and/or polyvinyl alcohol.

Said components such as surface-actives, biopolymers, chelating agents and amino acids can be presents at the same time in the composition object of the invention.

The surface-active agents, singularly or mixed, are of anionic type, such as the alkyl benzene sulfonate or of cationic type, such as the alkyl ammonium salts, or of non ionic type, such as TRITON®, for instance TRITON X-100® and X-20® of the Union Carbide Chemicals and Plastics & Co. Inc., TWEEN®, of the Atlas Chem. Ind. Inc., sucroesters, polyoxyethylenglycols, polyoxyethyleneters, alkylarylesters, alkyl phenol etoxylates, with concentrations weight/volume included between 0,001% and 0,30% of the liquid phase.

The biopolymers include singularly or mixed the followings component: alginates, ethers of the cellulose, carboxylmethylcellulose, carrageenan, agar, xanthans, lignin and the by-products of lignin, pectic acids, humic acids, fulvic acids with concentrations ranging from 0,001% to 0,50 %.

The chelating agents, singularly or mixed, include besides the mentioned humic substances, EDTA (ethylenediaminetetracetic acid) and its salts, EDDHA (ethylenediamine-dihydroxyphenylacetic acid) and its salts, citric acid, oxalic acid, succinic acid, gluconic acid, glyoxylic acid, tartaric acid in concentrations per liter variable between 0,05 milligrams and 50 grams.

The amino acids can be used pure or like hydrolysates of proteins or scleroproteins in concentrations varying from 0,005 milligrams to 20 grams of amino acids per liter of solution.

Polyvinyl alcohol, as polymer, can be found in concentration weight/volume of the composition included between 0,01% and 2%.

The aqueous solution, finally, can be administered to the vegetable in association or not with fertilizers commonly used that have synergic action, essential, preceding or following the element to be administered to the plant. Said fertilizers are typically urea and nitrogen salts such as ammonium nitrate and ammonium sulphate, salts of phosphorus and potassium.

The water of said composition is distilled, or deionized or drinking.

The preparation is sprayed at temperatures ranging from 4 to 40°C such as little drops having diameter less than one millimeter, preferably 0,05 mms, possibly on the hypogeous or epigean apparatus of the plants, particularly on the leaves, for a content of selenium in grams per hectare up to 500 grams and vanadium up to 600 grams for hectare, iodine up to 1 kilogram for hectare, molybdenum up to 1 kilogram for hectare, zinc up to 5 kilograms for hectare, and a pH ranging from 5 and 9. In alternative the roots or other parts of plant can be dipped in solutions having a selenium concentration per liter of solution up to 10 grams and a vanadium concentration per liter of solution up to 3 grams, and/or a iodine concentration per liter of solution up to 20 grams, and/or a molybdenum concentration per liter of solution up to 20 grams, and/or a zinc concentration per liter of solution up to 20 grams, at temperatures ranging from 4 to 40°C and a pH between 5 and 9.

The spraying or however the administration to the vegetables of this composition is repeated even more times during the vegetative cycle.

Further details will be described in the description of some reference examples of practice realization of the composition for the treatment of the vegetables.

### Example 1 (reference)

Sodium selenite and ammonium molybdate are applied to extensive potato and onion crops, in aqueous solution or in aqueous solution containing a mixture of humic acids and fulvic acid in concentration of 0,15%. The solutions, containing 25, 125 or 1250 milligrams of selenium per liter and 81 milligrams of molybdenum per liter, are sprayed on the leaves in such volumes (400 liters per hectare) to guarantee the administration, respectively of 10, 50 or 500 grams of selenium and 32,4 grams of molybdenum per hectare, to each kind of horticultural crop and for each formulation.

After the use, increasing the selenium concentration of the sprayed solutions, a concentration increase of the element is achieved both in the potatoes and in the onions. The solutions in pure water with 25, 125 or 1250 grams of selenium for hectare cause selenium increases in the potatoes respectively equal to 5, 7 and 40 times the concentration found in the sample (not treated with selenium) and in the onions respectively equal to 12, 18 and 50 times the concentration found in the sample. If the solutions containing humic acids and fulvic acid are used, the selenium accumulation in the potatoes and onions is respectively 1,5 times and 1,3 times in comparison to the accumulation obtained with pure water for all the selenium concentrations. The nitrates concentration in potatoes and onions is lower in all the cases compared with the untreated sample. The obtained products were recommended in vegetarian diets, poor of selenium and more at risk for the nitrates, contained in high quantity in the vegetables.

### Example 2 (reference)

Three fruit crops, apple tree, peach tree and vine, have been treated with aqueous solutions containing 50 milligrams of iodine and 10 or 100 or 1000 milligrams of zinc, respectively in form of sodium iodide and zinc sulfate, and containing or not the 0,5% of dimethylsulphoxide (DMSO). The solutions have been sprayed on the leaves, in such volumes to allow a total administration per hectare of 30 grams of iodine and 6, or 60, or 600 grams of zinc.

The fruits, at the harvest, had concentrations of iodine, zinc and vitamin higher than the untreated sample. In the apple trees, after spraying the aqueous solutions, fruits are obtained with iodine content triple in comparison with the sample and with zinc content equal to 4, 15 and 40 times of the sample; the vitamin C content was slightly higher than the sample, in case of administration of 6 or 60 grams of zinc per hectare, about 1,5 times in case of administration of 600 grams of zinc for hectare. In the peach trees, fruits are obtained with iodine content double in comparison to the sample and with zinc content equal to 3, 7 and 32 times the sample; the vitamin C content was slightly higher than the sample in case of administration of 6 or 60 grams of zinc per hectare, about 1,8 times in case of administration of 600 grams of zinc for hectare. In the vines, grapes are obtained with iodine content quadruples in comparison to the sample and with zinc content equal to 8, 20 and 54 times the sample; the vitamin C content was slightly higher to the sample in case of administration of 6 or 60 or 600 grams of zinc per hectare. Also using the solutions containing dimethylsulfoxide iodine and vitamin C contents are achieved comparable with the contents obtained using the aqueous solutions without DMSO, and zinc content in the fruits about 1,4 times higher in all the crops and for all the typologies of administration. Said fruits were suggested in distant areas from the sea and characterized by populations risking thyroid dysfunctions.

### Example 3 (reference)

10 or 50 grams of selenium per hectare, in form of solutions of sodium selenite or sodium selenate dissolved in pure water (with concentrations of 20 and 100 milligrams of selenium per liter), or in water containing also lignin ammonium sulfonate at 0,50 %, or in water containing also TWEEN 80® at 0,02 %, are applied on the leaves of three oleiferous crops, soy, sunflower and colza.

After the use, increasing the selenium concentration of the sprayed solutions, a concentration increase of the element is achieved in all the crops. The solutions in pure water with 10 and 50 grams of selenium per hectare cause a selenium increases in the soy respectively equal to 5 and 15 times for sodium selenite and equal to 6 and 18 times for sodium selenate in comparison with the reference value, in the sunflower respectively equal to 8 and 19 times for sodium selenite and equal to 10 and 21 times for sodium selenate in comparison with the reference value, in the colza respectively equal to 7 and 16 times for sodium selenite and equal to 9 and 17 times for sodium selenate in comparison with the reference value. If the solutions containing lignin ammonium sulphonate are used, the selenium accumulation is double in comparison with the accumulation achieved with pure water for all the concentrations and the selenium forms. If the solutions containing TWEEN 80® are used, the selenium accumulation does not differ from the accumulation achieved with pure water for all the selenium concentrations.

### Example 4 (reference)

20 grams of selenium per hectare and 10 or 100 or 500 grams of iodine, respectively in form of solutions of potassium selenite and potassium iodide, dissolved in pure water (with concentrations of 40 milligrams of selenium per liter and 20 or 200 or 1000 milligrams of iodine) or in water also containing hydrolysates of scleroproteins at 0,15%, or in water also containing EDTA at 3 %, are applied to the leaves of three cereal crops, tender wheat, hard wheat and barley.

After the use, an increase of the selenium and iodine concentration is achieved both in the straw and in the grains. The solutions in pure water cause in the grains selenium increase equal to 5 times and iodine increase equal to 5 and 25 and 50 times the reference value, while in the straw respectively equal to 8 times for the selenium and 12 and 22 and 58 times for the iodine with respect to the reference value. If the solutions containing EDTA are used, the selenium accumulation in the grains and in the straw is respectively 2 times and 1,5 times in comparison to the accumulation obtained with pure water, the iodine accumulation respectively equal to 1,3 and 1,2 for all the tested concentrations. If the solutions containing amino acids are used, the selenium and iodine accumulations in the grains and in the straw are equal to the accumulation achieved with the aqueous solutions.

The straw is used for feeding milk animals and so obtaining milk having an higher selenium and iodine content.

### Example 5 (reference)

Sodium selenite and sodium metavanadate, in aqueous solution or in aqueous solution containing alkyl naphthalene sodium sulphonate in concentration of 0,1%, are applied to two fodder crops, a field of lucerne (*Medicago sativa*) and a grass oligophyte meadow oat (*Oat sativa*) - vetch (*Vicia spp*.) *-* pea (*Pisum arvense*). The solutions, containing 25 milligrams of selenium and 15 or 150 or 1500 milligrams of vanadium per liter, are sprayed on the leaves in such volumes to guarantee the administration of 10 grams of selenium and 6 or 60 or 600 grams of vanadium per hectare to each kind of forages and for each formulation.

In the first three harvest of lucerne, forages are obtained with selenium and vanadium concentrations higher than the sample concentrations and for this latter increasing with the increase of the sodium metavanadate amount in the formulations; the last two mowings provide forages with selenium and vanadium concentrations equal to the sample concentrations. The solutions in pure water allow to achieve at the first mowing selenium concentrations in the fresh forage respectively equal to 7 times and vanadium concentrations equal to 8, 14 and 20 times the sample concentrations, at the second mowing equal to 4 times for the selenium and 3, 5 and 8 times for the vanadium, at third mowing equal to 3 times for the selenium and 2, 3 and 5 times for the vanadium. The solutions containing also alkyl naphthalene sodium sulphonate allow obtaining selenium and vanadium concentrations in the forage always higher in comparison to the aqueous solutions only.

The forage coming from the grass oligophyte meadow has selenium and vanadium concentrations higher than the sample. The solutions in pure water allow to achieve selenium concentrations in the fresh forage equal to 7 times and vanadium concentrations equal to 5, 12 and 18 times higher than the sample concentrations, the solutions containing also alkyl naphthalene sodium sulphonate allow obtaining selenium concentrations in the fresh forage equal to 9 times and vanadium concentrations equal to 10, 15 and 25 times higher than the sample concentrations.

The forages are used for feeding milk animals and so obtaining milk having a higher selenium and vanadium content.

### Example 6 (reference)

Tomato seedlings are cultivated in hydroponics solutions respectively containing 0,05 milligrams of selenium and 0,5 or 5 or 50 milligrams of iodine per liter in form of potassium selenate and potassium iodide. After four weeks the plants are planted in greenhouse in ground of middle mixture and subject to a classical manuring.

From these plants are obtained tomatoes with a selenium and iodine content higher than the content of sample plants raised in hydroponics solution too, but without the addition of the aforesaid salts. Said concentrations are 2 times higher than the sample concentration for the selenium and respectively 1,5, 4 and 6 times higher than the sample concentration for the iodine in correspondence of the three tested concentrations of potassium iodide.

## Claims

1. Composition in the form of an aqueous solution for increasing the nutritional quality of the vegetable including selenium salts with a selenium content per liter of solution ranging from 0,005 milligrams to 20 grams and vanadium salts with a vanadium content per liter of solution ranging from 0,0005 milligrams to 3 grams, said composition further includes iodine salts with a iodine content per liter of solution ranging from 0,005 milligrams to 20 grams, said composition being **characterized in that** said iodine salts comprise iodate of sodium, potassium, calcium, magnesium, barium and copper and ammonium.

2. Composition according to claim 1 **characterized in that** further includes zinc salts with a zinc content per liter of solution ranging from 0,005 milligrams to 20 grams.

3. Composition according to any of the preceding claims **characterized in that** further includes molybdenum salts with a molybdenum content per liter of solution ranging from 0,005 milligrams to 20 grams.

4. Composition according to claim 1 **characterized in that** said selenium salts are essentially selenites and selenates of sodium, potassium, calcium, magnesium, barium, copper, ammonium and zinc, and said vanadium salts are essentially constituted by metavanadates and vanadates of sodium, potassium, and ammonium.

5. Composition according to claim 1 **characterized in that** said iodine salts include iodide of sodium, potassium, calcium, magnesium, barium and copper and ammonium.

6. Composition according to claim 2 **characterized in that** said zinc salts are essentially constituted by zinc sulfate, acetate, chloride, perchlorate, nitrate, stearate, sulphide and oxide.

7. Composition according to claim 3 **characterized in that** said molybdenum salts are constituted by molybdates of ammonium, sodium and potassium.

8. Composition according to any of the preceding claims **characterized in that** further includes organic solvents in the ratio of 0,005% to 25 % of the liquid phase in order to make easier the adsorption of the components of said composition by the leaf apparatus or the roots in hydroponic solution or the fruits or the tubers or the bulbs or other parts of said vegetable.

9. Composition according to claim 8 **characterized in that** said solvents include, singularly or mixed: dimethylsulphoxide, glycols of the type ethylenic, polyethylenic, hesilenic, butyl, 1-2 propylenglycoles, ethers of glycols and polyglycols with methyl, ethylic, propylic, butyl alcohol and other glycols up to a molecular weight of 20.000, polyglycols and polyoxyethylenglycols up to a molecular weight of 20.000 each.

10. Composition according to claim 1 **characterized in that** further includes component suitable to bond the ions of selenium and vanadium salts, because they have functional groups such as hydroxyl, carboxyl, carbonyl, amines, sulphidryls, phenols.

11. Composition according to claim 10 **characterized in that** said components are constituted by surface-active agents, in concentrations weight/volume varying from 0,001% to 0,30%, fit to reduce interface tension between the sprayed vegetable portion and the sprayed composition.

12. Composition according to claim 11 **characterized in that** said surface-actives are of type: anionics, such as alkyl benzen sulphonate; cationics, such as alkyl ammonium salts; not ionic, such as TRITON, TWEEN®, sucroesters, polyoxyethylenglycols, polyoxyethylenethers, alkyl aryl esters, alkyl phenol etoxylates.

13. Composition according to claim 10 **characterized in that** said components are constituted by biopolymers, in concentrations weight/volume ranging from 0,001% to 0,50 %, fit for regulating the viscosity of said composition and favoring the checked and gradual release of this latter.

14. Composition according to claim 13 **characterized in that** said biopolymers include, singularly or mixed: alginates, ethers of the cellulose, carboxylmethylcellulose, carrageenan, agar, xanthans, lignin and the by-products of lignin, pectic acids, humic acids, fulvic acids.

15. Composition according to claim 10 **characterized in that** said component are constituted by chelating agents, in concentration per liter ranging from 0,05 milligrams to 50 grams, fit for making available the aforesaid elements to the plants for a longer time.

16. Composition according to claim 15 **characterized in that** chelating agents include, singularly or mixed: humic substances, EDTA (ethylenediaminetetracetic acid) and its salts, EDDHA (ethylenediamine dihyidroxyphenylacetic acid) and its salts, citric acid, oxalic acid, succinic acid, gluconic acid, glyoxylic acid, tartaric acid.

17. Composition according to claim 10 **characterized in that** said components are constituted by amino acids, polyamino acids and polyamines, in concentration ranging from 0,005 milligrams to 20 grams per liter of solution, fit to bond the contained element in the composition and help the transport of said element inside the vegetable tissue.

18. Composition according to claim 17 **characterized in that** the amino acids are used pure or as hydrolysates of proteins or scleroproteins.

19. Composition according to claim 10 **characterized in that** said components are constituted by polyvinyl alcohol, in concentration weight/volume of the said composition varying from 0,01% to 2%.

20. Composition according to claim 10 **characterized in that** said components of the type surface-active agents, biopolymers, chelating agents, amino acids and polyvinyl alcohol are together in the composition at the same time.

21. Composition according to claim 1 **characterized in that** further includes:
- organic solvents with ratio of 0,005% to 25 % of the liquid phase;
- components suitable to bond the ions of selenium and vanadium salts.

22. Composition according to claim 21 **characterized in that** the components are constituted by:
- surface-active agents in concentrations ranging from 0,001% to 0,30 %,
- and/or biopolymers in concentrations ranging from 0,001% to 0,50 %,
- and/or chelating agent, in concentration per liter ranging from 0,05 milligrams to 50 grams,
- and/or amino acids, polyamino acids and polyamines, in concentration ranging from 0,005 milligrams to 20 grams per liter of solution,
- and/or polyvinyl alcohol in concentration weight/volume of said composition ranging from 0,01% to 2%.

23. Composition according to claim 1 **characterized in that** the water of said aqueous solution is distilled or deionized or drinking.

24. Use of the composition according to the preceding claims to be sprayed on vegetable in order to increase the amount of selenium and vanadium and/or iodine and/or molybdenum, and/or zinc, and/or acid ascorbic and/or to reduce the amount of nitrates and glyco alkaloids contained in said vegetable.

25. Use according to claim 24 in which the vegetable spraying is made by spraying said composition on the hypogeous or epigean apparatus of said vegetable.

26. Use according to claim 24 in which said composition is sprayed on said vegetable for a selenium content per hectare included between 2 and 200 grams and iodine content up to 1 kilogram per hectare, and/or of vanadium up to 600 grams per hectare, and/or molybdenum up to 1 kilogram per hectare, and/or zinc up to 5 kilograms per hectare.

27. Use according to claim 24 in which into said composition are dipped the roots or other parts of plant in solutions having concentration per liter of selenium solution up to 10 grams and iodine solution up to 20 grams, and/or vanadium concentration per liter of solution up to 3 grams, and/or molybdenum concentration per liter of solution up to 20 grams, and/or zinc concentration per liter of solution up to 20 grams.

28. Use according to claim 24 in which said composition is sprayed under form of small drops having a diameter smaller than one millimeter, preferably 0,05 millimeters.

29. Use according to claim 24 in which said composition is sprayed on said vegetable at the temperature ranging from 4°C to 40°C.

30. Use according to claim 24 in which said composition is sprayed on said vegetable at a pH value ranging from 5 to 9.

31. Use according to claim 24 in which said vegetable are horticultural products, particularly potatoes, tomatoes, eggplants, carrots, broccolis, fennels, cauliflowers, artichokes, radishes, peppers, onions, garlic, beets, lettuces, succory, chicory, courgettes.

32. Use according to claim 24 in which said vegetable are industrial oleiferous crops such as soy, colza, sunflower, or sugar crops such as sugar beet or sugar reed or cereals such as wheat, barley, corn, sorghum, oat, rice, or officinal crops and spice such as red pepper, pepper, rosemary or fodder plant both rotated and permanent.

33. Use according to claim 24 in which said vegetable are fruits, particularly apples, pears, apricots, cherries, peaches, kiwi, plums.

34. Use according to claim 24 in which the spraying of said vegetable is repeated during their vegetative cycle.

35. Use according to claim 24 in which said composition is sprinkled directly on said vegetable products after their harvest.

## Patentansprüche

1. Zusammensetzung in Form einer wässrigen Lösung zur Erhöhung der nährwertbezogenen Qualität von Pflanzen, umfassend Selensalze mit einem Selengehalt von 0,005 Milligramm bis 20 Gramm pro Liter Lösung und Vanadiumsalze mit einem Vanadiumgehalt von 0,0005 Milligramm bis 3 Gramm pro Liter Lösung, wobei die Zusammensetzung weiterhin Jodsalze mit einem Jodgehalt von 0,005 Milligramm bis 20 Gramm pro Liter Lösung umfasst, und die Zusammensetzung ist **dadurch gekennzeichnet, dass** die Jodsalze Jodate von Natrium, Kalium, Kalzium, Magnesium, Barium und Kupfer sowie Ammonium umfassen.

2. Zusammensetzung gemäß Patentanspruch 1, **dadurch gekennzeichnet, dass** die Zusammensetzung weiterhin Zinksalze mit einem Zinkgehalt von 0,005 Milligramm bis 20 Gramm pro Liter Lösung umfasst.

3. Zusammensetzung gemäß einem der vorhergehenden Patentansprüche, **dadurch gekennzeichnet, dass** die Zusammensetzung weiterhin Molybdänsalze mit einem Molybdängehalt von 0,005 Milligramm bis 20 Gramm pro Liter Lösung umfasst.

4. Zusammensetzung gemäß Patentanspruch 1, **dadurch gekennzeichnet, dass** die Selensalze hauptsächlich Selenite und Selenate von Natrium, Kalium, Kalzium, Magnesium, Barium, Kupfer, Ammonium und Zink sind, wobei die Vanadiumsalze hauptsächlich aus Metavanadaten und Vanadaten von Natrium, Kalium und Ammonium bestehen.

5. Zusammensetzung gemäß Patentanspruch 1, **dadurch gekennzeichnet, dass** die Jodsalze Jodide von Natrium, Kalium, Kalzium, Magnesium, Barium und Kupfer sowie Ammonium umfassen.

6. Zusammensetzung gemäß Patentanspruch 2, **dadurch gekennzeichnet, dass** die Zinksalze hauptsächlich aus Zinksulfat, Azetat, Chlorid, Perchlorat, Nitrat, Stearat, Sulfid und Oxid bestehen.

7. Zusammensetzung gemäß Patentanspruch 3, **dadurch gekennzeichnet, dass** die Molybdänsalze aus Molybdaten von Ammonium, Natrium und Kalium bestehen.

8. Zusammensetzung gemäß einem der vorhergehenden Patentansprüche, **dadurch gekennzeichnet, dass** die Zusammensetzung weiterhin organische Lösungsmittel im Verhältnis von 0,005 % bis 25 % der flüssigen Phase umfasst, um die Adsorption der Bestandteile der Zusammensetzung durch das Blattwerk oder die Wurzeln in Hydrokulturlösung oder die Früchte oder die Knollen oder die Zwiebeln oder andere Teile der Pflanze zu erleichtern.

9. Zusammensetzung gemäß Patentanspruch 8, **dadurch gekennzeichnet, dass** die Lösungsmittel, einzeln oder gemischt, umfassen: Dimethylsulfoxid, Glykole vom ethylenischen, polyethylenischen oder hesilenischen (hesilenic) Typ, Butyl, 1-2 Propylenglykole, Ether von Glykolen oder Polyglykolen mit Methyl, ethylisch, propylisch, Butylalkohol und andere Glykole bis zu einem Molekulargewicht von 20.000, Polyglykole und Polyoxyethylenglykole bis zu einem Molekulargewicht von jeweils 20.000.

10. Zusammensetzung gemäß Patentanspruch 1, **dadurch gekennzeichnet, dass** die Zusammensetzung weiterhin Bestandteile aufweist, die geeignet sind, die Ionen von Selen- und Vanadiumsalzen zu binden, da die Bestandteile funktionelle Gruppen wie beispielsweise Hydroxyl, Carboxyl, Carbonyl, Amine, Sulfhydryle oder Phenole aufweisen.

11. Zusammensetzung gemäß Patentanspruch 10, **dadurch gekennzeichnet, dass** die einzelnen Bestandteile aus oberflächenaktiven Agenzien bestehen, in Konzentrationen Masse/Volumen von 0,001 % bis 0,30 %, wobei die Agenzien geeignet sind, die Grenzflächenspannung zwischen dem besprühten Pflanzenbereich und der versprühten Zusammensetzung zu reduzieren.

12. Zusammensetzung gemäß Patentanspruch 11, **dadurch gekennzeichnet, dass** die oberflächenaktiven Agenzien vom Typ sind: anionisch, wie beispielsweise Alkyl-Benzen-Sulfonate; kationisch, wie beispielsweise Alkyl-Ammonium-Salze; nicht-ionisch, wie beispielsweise TRITON, TWEEN^{®}, Sucroseester, Polyoxyethylenglykole, Polyoxyethylenether, Alkyl-Aryl-Ester, Alkyl-Phenol-Ethoxylate.

13. Zusammensetzung gemäß Patentanspruch 10, **dadurch gekennzeichnet, dass** die Bestandteile aus Biopolymeren bestehen, in Konzentrationen Masse/Volumen von 0,001 % bis 0,50 %, wobei die Biopolymere geeignet sind, die Viskosität der Zusammensetzung zu regulieren und die kontrollierte und schrittweise Abgabe der Zusammensetzung zu begünstigen.

14. Zusammensetzung gemäß Patentanspruch 13, **dadurch gekennzeichnet, dass** die Biopolymere, einzeln oder gemischt, umfassen: Alginate, Ether der Cellulose, Carboxymethylcellulose, Carrageenan, Agar, Xanthane, Lignin sowie die Nebenprodukte von Lignin, Pektinsäuren, Huminsäuren oder Fulvinsäuren.

15. Zusammensetzung gemäß Patentanspruch 10, **dadurch gekennzeichnet, dass** die Bestandteile aus Chelatbildnern bestehen, in Konzentrationen pro Liter von 0,05 Milligramm bis zu 50 Gramm, wobei die Chelatbildner geeignet sind, den Pflanzen die oben genannten Elemente für einen längeren Zeitraum zugänglich zu machen.

16. Zusammensetzung gemäß Patentanspruch 15, **dadurch gekennzeichnet, dass** die Chelatbildner, einzeln oder gemischt, umfassen: Huminstoffe, EDTA (ethylendiaminetetracetic entspricht Ethylendiamintetraacetat) sowie die Salze davon, EDDHA (ethylenediamine dihyidroxyphenylacetic entspricht Ethylendiamin-Dihydroxyphenylacetat) sowie die Salze davon, Zitronensäure, Oxalsäure, Succinylsäure, Glukonsäure, Glyoxylsäure sowie Weinsäure.

17. Zusammensetzung gemäß Patentanspruch 10, **dadurch gekennzeichnet, dass** die Bestandteile aus Aminosäuren, Polyaminosäuren und Polyaminen bestehen, in Konzentrationen pro Liter Lösung von 0,005 Milligramm bis zu 20 Gramm, die geeignet sind, das enthaltene Element in der Zusammensetzung zu binden und den Transport in das Gewebe der Pflanze zu fördern.

18. Zusammensetzung gemäß Patentanspruch 17, **dadurch gekennzeichnet, dass** die Aminosäuren rein oder als Hydrolysate von Proteinen oder Strukturproteinen verwendet werden.

19. Zusammensetzung gemäß Patentanspruch 10, **dadurch gekennzeichnet, dass** die Bestandteile aus Polyvinylalkohol bestehen, in Konzentrationen Masse/Volumen der Zusammensetzung von 0,01 % bis 2 %.

20. Zusammensetzung gemäß Patentanspruch 10, **dadurch gekennzeichnet, dass** die Bestandteile vom Typ der oberflächenaktiven Agenzien, der Biopolymere, der Chelatbildner, der Aminosäuren und des Polyvinylalkohols zur gleichen Zeit in der Zusammensetzung vorliegen.

21. Zusammensetzung gemäß Patentanspruch 1, **dadurch gekennzeichnet, dass** die Zusammensetzung weiterhin umfasst:
- organische Lösungsmittel mit einem Verhältnis von 0,005 % bis 25 % der flüssigen Phase;
- Bestandteile, die geeignet sind, die Ionen von Selen- und Vanadiumsalzen zu binden.

22. Zusammensetzung gemäß Patentanspruch 21, **dadurch gekennzeichnet, dass** die Bestandteile bestehen aus:
- oberflächenaktiven Agenzien in Konzentrationen von 0,001 % bis 0,30 %,
- und/oder Biopolymeren in Konzentrationen von 0,001 % bis 0,50 %,
- und/oder Chelatbildner in einer Konzentration pro Liter von 0,05 Milligramm bis 50 Gramm,
- und/oder Aminosäuren, Polyaminosäuren oder Polyaminen in einer Konzentration pro Liter Lösung von 0,005 Milligramm bis 20 Gramm,
- und/oder Polyvinylalkohol in Konzentrationen Masse/Volumen der Zusammensetzung von 0,01 % bis 2 %.

23. Zusammensetzung gemäß Patentanspruch 1, **dadurch gekennzeichnet, dass** das Wasser der wässrigen Lösung aus destilliertem oder de-ionisiertem oder Trinkwasser besteht.

24. Verwendung der Zusammensetzung gemäß einem der vorhergehenden Patentansprüche, die auf eine Pflanze gesprüht werden soll, um die Menge an Selen und Vanadium und/oder Jod und/oder Molybdän und/oder Zink und/oder Ascorbinsäure in der Pflanze zu erhöhen und/oder um die Menge an in der Pflanze enthaltenen Nitraten und Glyko-Alkaloiden zu verringern.

25. Verwendung gemäß Patentanspruch 24, bei der das Besprühen der Pflanze durch Sprühen der Zusammensetzung auf den hypogäischen bzw. unterirdischen oder epigäischen bzw. oberirdischen Teil der Pflanze erfolgt.

26. Verwendung gemäß Patentanspruch 24, bei der die Zusammensetzung auf die Pflanze gesprüht wird für einen Selengehalt pro Hektar zwischen 2 und 200 Gramm und einen Jodgehalt von bis zu 1 kg pro Hektar und/oder Vanadium von bis zu 600 Gramm pro Hektar und/oder Molybdän von bis zu 1 kg pro Hektar und/oder Zink von bis zu 5 kg pro Hektar.

27. Verwendung gemäß Patentanspruch 24, bei der die Wurzeln oder andere Teile der Pflanze in Lösungen getaucht werden, die aufweisen eine Konzentration pro Liter an Selenlösung von bis zu 10 Gramm und Jodlösung von bis zu 20 Gramm und/oder eine Vanadiumkonzentration pro Liter Lösung von bis zu 3 Gramm und/oder eine Molybdänkonzentration pro Liter Lösung von bis zu 20 Gramm und/oder eine Zinkkonzentration pro Liter Lösung von bis zu 20 Gramm.

28. Verwendung gemäß Patentanspruch 24, wobei die Zusammensetzung in Form von kleinen Tropfen versprüht wird, die einen Durchmesser kleiner als einen Millimeter aufweisen, vorzugsweise kleiner als 0,05 Millimeter.

29. Verwendung gemäß Patentanspruch 24, wobei die Zusammensetzung bei einer Temperatur zwischen 4 °C und 40 °C auf die Pflanze gesprüht wird.

30. Verwendung gemäß Patentanspruch 24, wobei die Zusammensetzung bei einem pH-Wert zwischen 5 und 9 auf die Pflanze gesprüht wird.

31. Verwendung gemäß Patentanspruch 24, wobei es sich bei der Pflanze um Gartenbauprodukte handelt, vor allem um Kartoffeln, Tomaten, Auberginen, Karotten, Brokkoli, Fenchel, Blumenkohl, Artischocken, Radieschen, Paprika, Zwiebeln, Knoblauch, Rote Beete, Salatpflanzen, Zichorie, Endivien, Zucchini.

32. Verwendung gemäß Patentanspruch 24, wobei die Pflanzen industrielle Ölpflanzen, wie beispielsweise Soja, Raps, Sonnenblumen, oder Zuckerpflanzen, wie Zuckerrüben oder Zuckerrohr, oder Getreide, wie beispielsweise Weizen, Gerste, Mais, Sorgumhirse, Hafer, Reis, oder Heilpflanzen und Gewürze, wie rote Paprika bzw. Cayennepfeffer, Pfeffer, Rosmarin, oder Futterpflanzen sind, entweder in wechselnder Fruchtfolge oder im Daueranbau.

33. Verwendung gemäß Patentanspruch 24, wobei die Pflanzen Obstsorten sind, insbesondere Äpfel, Birnen, Aprikosen, Kirschen, Pfirsiche, Kiwis, Pflaumen.

34. Verwendung gemäß Patentanspruch 24, wobei das Besprühen der Pflanzen wiederholt wird während ihres vegetativen Zyklus.

35. Verwendung gemäß Patentanspruch 24, bei der die Zusammensetzung direkt auf die Pflanzenprodukte nach ihrer Ernte gesprüht wird.

## Revendications

1. Composition sous la forme d'une solution aqueuse pour augmenter la qualité nutritionnelle des légumes comprenant des sels de sélénium ayant une teneur en sélénium par litre de solution dans la plage de 0,005 milligramme à 20 grammes et des sels de vanadium ayant une teneur en vanadium par litre de solution dans la plage de 0,0005 milligramme à 3 grammes, ladite composition comprenant en outre des sels d'iode ayant une teneur en iode par litre de solution dans la plage de 0,005 milligramme à 20 grammes, ladite composition étant **caractérisée en ce que** lesdits sels d'iode comprennent l'iodate de sodium, de potassium, de calcium, de magnésium, de baryum et de cuivre et d'ammonium.

2. Composition selon la revendication 1 **caractérisée en ce qu'**elle comprend en outre des sels de zinc ayant une teneur en zinc par litre de solution dans la plage de 0,005 milligramme à 20 grammes.

3. Composition selon l'une quelconque des revendications précédentes **caractérisée en ce qu'**elle comprend en outre des sels de molybdène ayant une teneur en molybdène par litre de solution dans la plage de 0,005 milligramme à 20 grammes.

4. Composition selon la revendication 1 **caractérisée en ce que** lesdits sels de sélénium sont essentiellement des sélénites et des sélénates de sodium, de potassium, de calcium, de magnésium, de baryum, de cuivre, d'ammonium et de zinc, et lesdits sels de vanadium sont essentiellement constitués de métavanadates et vanadates de sodium, potassium, et ammonium.

5. Composition selon la revendication 1 **caractérisée en ce que** lesdits sels d'iode comprennent de l'iodure de sodium, de potassium, de calcium, de magnésium, de baryum et de cuivre et d'ammonium.

6. Composition selon la revendication 2 **caractérisée en ce que** lesdits sels de zinc sont essentiellement constitués de sulfate, acétate, chlorure, perchlorate, nitrate, stéarate, sulfure et oxyde de zinc.

7. Composition selon la revendication 3 **caractérisée en ce que** lesdits sels de molybdène sont constitués de molybdates d'ammonium, de sodium et de potassium.

8. Composition selon l'une quelconque des revendications précédentes **caractérisée en ce qu'**elle comprend en outre des solvants organiques dans le rapport de 0,005 % à 25 % de la phase liquide afin de faciliter l'adsorption des composants de ladite composition par l'appareil foliaire ou les racines dans une solution hydroponique ou les fruits ou les tubercules ou les bulbes ou d'autres parties desdits légumes.

9. Composition selon la revendication 8 **caractérisée en ce que** lesdits solvants comprennent, individuellement ou en mélange : du diméthylsulfoxyde, des glycols de type éthylénique, polyéthylénique, hésilénique, butyle, 1-2-propylèneglycols, éthers de glycols et polyglycols avec l'alcool méthylique, éthylique, propylique, butylique et d'autres glycols jusqu'à un poids moléculaire de 20 000, des polyglycols et des polyoxyéthylèneglycols jusqu'à un poids moléculaire de 20 000 chacun.

10. Composition selon la revendication 1 **caractérisée en ce qu'**elle comprend en outre un composant adapté pour se lier aux ions des sels de sélénium et de vanadium, parce qu'ils ont des groupes fonctionnels tels que des hydroxyle, carboxyle, carbonyle, amines, sulfhydryles, phénols.

11. Composition selon la revendication 10 **caractérisée en ce que** lesdits composants sont constitués d'agents tensioactifs, à des concentrations en poids/volume variant de 0,001 % à 0,30 %, adaptés pour réduire la tension interfaciale entre la portion de légume pulvérisée et la composition pulvérisée.

12. Composition selon la revendication 11 **caractérisée en ce que** lesdits tensioactifs sont de type : anioniques, tels que l'alkylbenzènesulfonate ; cationiques, tels que des sels d'alkylammonium ; non ioniques, tels que TRITON ; TWEEN^{®}, sucroesters, polyoxyéthylèneglycols, éthers polyoxyéthyléniques, esters d'alkylaryle, éthoxylates d'alkylphénol.

13. Composition selon la revendication 10 **caractérisée en ce que** lesdits composants sont constitués de biopolymères, à des concentrations poids/volume dans la plage de 0,001 % à 0,50 %, adaptés pour réguler la viscosité de ladite composition et favoriser la libération contrôlée et progressive de cette dernière.

14. Composition selon la revendication 13 **caractérisée en ce que** lesdits biopolymères comprennent, individuellement ou en mélange : des alginates, des éthers de cellulose, de la carboxylméthylcellulose, du carraghénane, de la gélose, des xanthanes, de la lignine et des sous-produits de lignine, des acides pectiques, des acides humiques, des acides fulviques.

15. Composition selon la revendication 10 **caractérisée en ce que** lesdits composants sont constitués d'agents chélateurs, à une concentration par litre dans la plage de 0,05 milligramme à 50 grammes, adaptés pour rendre disponibles les éléments mentionnés ci-dessus pour les plantes pendant un temps plus long.

16. Composition selon la revendication 15 **caractérisée en ce que** les agents chélateurs comprennent, individuellement ou en mélange : des substances humiques, de l'EDTA (acide éthylènediaminetétracétique) et ses sels, de l'EDDHA (acide éthylènediaminedihydroxyphénylacétique) et ses sels, de l'acide citrique, de l'acide oxalique, de l'acide succinique, de l'acide gluconique, de l'acide glyoxylique, de l'acide tartrique.

17. Composition selon la revendication 10 **caractérisée en ce que** lesdits composants sont constitués d'acides aminés, de poly(acides aminés) et de polyamines, à une concentration dans la plage de 0,005 milligramme à 20 grammes par litre de solution, adaptés pour se lier à l'élément contenu dans la composition et faciliter le transport dudit élément à l'intérieur du tissu de légume.

18. Composition selon la revendication 17 **caractérisée en ce que** les acides aminés sont utilisés purs ou sous forme d'hydrolysats de protéines ou de scléroprotéines.

19. Composition selon la revendication 10 **caractérisée en ce que** lesdits composants sont constitués d'alcool polyvinylique, à une concentration poids/volume de ladite composition variant de 0,01 % à 2 %.

20. Composition selon la revendication 10 **caractérisée en ce que** lesdits composants du type agents tensioactifs, biopolymères, agents chélateurs, acides aminés et alcool polyvinylique sont conjointement dans la composition simultanément.

21. Composition selon la revendication 1 **caractérisée en ce qu'**elle comprend en outre :
- des solvants organiques avec un rapport de 0,005 % à 25 % de la phase liquide ;
- des composants adaptés pour se lier aux ions des sels de sélénium et de vanadium.

22. Composition selon la revendication 21 **caractérisée en ce que** les composants sont constitués de :
- agents tensioactifs à des concentrations dans la plage de 0,001 % à 0,30 %,
- et/ou des biopolymères à une concentrations dans la plage de 0,001 % à 0,50 %,
- et/ou un agent chélateur, à une concentration par litre dans la plage de 0,05 milligramme à 50 grammes,
- et/ou des acides aminés, des poly(acides aminés) et des polyamines, à une concentration dans la plage de 0,005 milligramme à 20 grammes par litre de solution,
- et/ou de l'alcool polyvinylique à une concentration poids/volume de ladite composition dans la plage de 0,01 % à 2 %.

23. Composition selon la revendication 1 **caractérisée en ce que** l'eau de ladite solution aqueuse est distillée ou déminéralisée ou potable.

24. Utilisation de la composition selon les revendications précédentes destinée à être pulvérisée sur des légumes afin d'augmenter la quantité de sélénium et de vanadium et/ou d'iode et/ou de molybdène, et/ou de zinc, et/ou d'acide ascorbique et/ou pour réduire la quantité de nitrates et de glyco-alcaloïdes contenue dans lesdits légumes.

25. Utilisation selon la revendication 24 dans laquelle la pulvérisation sur les légumes est effectuée par pulvérisation de ladite composition sur l'appareil hypogé ou épigé dudit légume.

26. Utilisation selon la revendication 24 dans laquelle ladite composition est pulvérisée sur ledit légume pour une teneur en sélénium par hectare comprise entre 2 et 200 grammes et une teneur en iode allant jusqu'à 1 kilogramme par hectare, et/ou de vanadium jusqu'à 600 grammes par hectare, et/ou de molybdène jusqu'à 1 kilogramme par hectare, et/ou de zinc jusqu'à 5 kilogrammes par hectare.

27. Utilisation selon la revendication 24 dans laquelle, dans ladite composition, sont immergées les racines ou d'autres parties de plante dans des solutions ayant une concentration par litre de solution de sélénium allant jusqu'à 10 grammes et de solution d'iode allant jusqu'à 20 grammes, et/ou une concentration de vanadium par litre de solution jusqu'à 3 grammes, et/ou une concentration de molybdène par litre de solution jusqu'à 20 grammes, et/ou une concentration de zinc par litre de solution jusqu'à 20 grammes.

28. Utilisation selon la revendication 24 dans laquelle ladite composition est pulvérisée sous la forme de petites gouttes ayant un diamètre inférieur à un millimètre, de préférence 0,05 millimètre.

29. Utilisation selon la revendication 24 dans laquelle ladite composition est pulvérisée sur lesdits légumes à une température dans la plage de 4 °C à 40 °C.

30. Utilisation selon la revendication 24 dans laquelle ladite composition est pulvérisée sur lesdits légumes à une valeur de pH dans la plage de 5 à 9.

31. Utilisation selon la revendication 24 dans laquelle lesdits légumes sont des produits horticoles, en particulier des pommes de terre, des tomates, des aubergines, des carottes, des brocolis, du fenouil, des choux-fleurs, des artichauts, des radis, des poivrons, des oignons, de l'ail, des betteraves, des laitues, de la chicorée, des endives, des courgettes.

32. Utilisation selon la revendication 24 dans laquelle lesdits légumes sont des cultures oléagineuses industrielles telles que le soja, le colza, le tournesol, ou des cultures sucrières telles que la betterave sucrière ou la canne à sucre ou des céréales telles que le blé, l'orge, le maïs, le sorgho, l'avoine, le riz, ou des cultures officinales et des épices telles que le rouge, le poivre, le romarin ou une plante fourragère en rotation ou permanente.

33. Utilisation selon la revendication 24 dans laquelle lesdits légumes sont des fruits, en particulier des pommes, des poires, des abricots, des cerises, des pêches, des kiwis, des prunes.

34. Utilisation selon la revendication 24 dans laquelle la pulvérisation sur lesdits légumes est répétée pendant leur cycle végétatif.

35. Utilisation selon la revendication 24 dans laquelle ladite composition est directement aspergée sur lesdits produits de légumes après leur récolte.
